# EUROPÄISCHE PATENTSCHRIFT

(11) **EP 1 328 429 B1**
(45) Veröffentlichungstag und Bekanntmachung des Hinweises auf die Patenterteilung: **24.05.2006**
(21) Anmeldenummer: 01965267.6
(22) Anmeldetag: 08.09.2001
(51) Int. Cl.: B61B 7/00, F03D 11/04

(54) **WINDPARK**
WIND PARK
PARC EOLIEN

(30) Priorität: 17.10.2000 DE 10051513
(43) Veröffentlichungstag der Anmeldung: 23.07.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/010391
(87) Internationale Veröffentlichungsnummer: WO 2002/032739

(56) Entgegenhaltungen:
- DE-A- 1 430 976
- DE-A- 4 241 677
- DE-A- 4 334 589
- DE-A- 19 747 237
- GB-A- 2 041 320
- GB-A- 2 104 022

## Beschreibung

Die vorliegende Erfindung betrifft einen Windpark mit wenigstens zwei Windenergieanlagen und insbesondere einen Off-Shore-Windpark.

Die Windenergieanlagen in Windparks weisen untereinander solche Abstände auf, dass eine Kollision von Rotorblättern auch bei drehendem Wind sicher vermieden wird und eine Beeinflussung der Windenergieanlagen untereinander durch veränderte Strömungsbedingungen des Windes möglichst gering gehalten wird. Abhängig vom Radius des vom Rotor einer Windenergieanlage überstrichenen Kreises können dies im Stand der Technik bereits Rotordurchmesser von mehr als 100 m sein und mit steigenden Abmessungen neuer Windenergieanlagen wird der Abstand noch größer.

Unabhängig von Standort und Größe benötigt jede Windenergieanlage Wartung und im Falle von Störungen eine Beseitigung derselben. Dazu muß Personal und Material zu der Windenergieanlage transportiert werden.

Während es bei Windparks an Land relativ einfach ist; Personal und Material zu jeder Windenergieanlage zu bringen, ist dies bei Off-Shore-Windparks schon mit deutlich größerem Aufwand verbunden. Dabei bedeutet es bereits eine Vereinfachung, Güter wie Werkzeug, Ersatzteile, etc. und Personen an einer Stelle anzulanden, statt jede Windenergieanlage eines Windparks einzeln anlaufen zu müssen.

Damit ergibt sich das Problem der Verteilung angelandeter Güter bzw. allgemein des Transportes von Gütern und/oder Personen zwischen Windenergieanlagen eines Windparks und insbesondere eines Off-Shore-Windparks.

Unter der Prämisse, dass ein Windpark einen zentralen Anlegeplatz aufweist, an dem alle Güter und Personen ankommen, bzw. abfahren, müssen diese demnach zwischen den einzelnen Windenergieanlagen des Windparks transportiert werden.

Gerade Off-Shore-Windparks zeichnen sich dadurch aus, dass dort an dem das Wetter stets rauher ist als an Land. Wind kann ungehindert wehen und erreicht schnell hohe Geschwindigkeiten.

Darüber hinaus ist stets mit mehr oder weniger hohem Wellengang zu rechnen. Ein Transportieren der Güter und Übersetzen von Personen zu den einzelnen Windenergieanlagen ist daher häufig nicht nur ungemütlich, sondern sogar mit einem beträchtlichen Risiko behaftet.

Die Aufgabe der vorliegenden Erfindung ist es daher, einen Windpark anzugeben, bei dem Transporte zwischen einzelnen Windenergieanlagen sicherer durchgeführt werden können.

Diese Aufgabe wird erfindungsgemäß gelöst durch eine Seilverbindung zwischen wenigstens zwei der Windenergieanlagen und eine an dieser Seilverbindung angeordnete Gondel. Mit dieser Gondel kann der Personen- und Güter-Transport zwischen den Windenergieanlagen bewerkstelligt werden. Vorteilhafte Weiterbildungen sind in den weiteren Windparks somit nachfolgend beschrieben.

Dabei verläuft die Seilverbindung bevorzugt in einer Höhe, die weder den Rotordurchmesser der Windenergieanlage berührt, noch mit Wellenkämmen in Berührung kommt, auch bei hohem Seegang nicht.

An jeder Windenergieanlage kann eine Umlenkvorrichtung für die Seilverbindung vorgesehen sein, wobei die Seilverbindung als Endlosseil entlang der Umlenkvorrichtungen verläuft und die Gondel fest mit der Seilverbindung verbunden ist. Die Gondel kann so durch Bewegen der Seilverbindung in die gewünschte Richtung verfahren werden und der Aufbau ist sehr einfach.

Bei zwei miteinander verbundenen Windenergieanlagen läuft die Seilverbindung an jeder Windenergieanlage um die Umlenkvorrichtung herum und wird zu der anderen Anlage zurückgeführt. Verbindet die Seilverbindung wenigstens drei Windenergieanlagen miteinander, dient die Umlenkvorrichtung an der mittleren Windenergieanlage als Stütze und die Seilverbindung wird zu der jeweils äußeren Windenergieanlage weitergeführt.

Die Bewegung der Seilverbindung kann durch einen Motor und bevorzugt durch einen elektrisch betriebenen Motor erfolgen. Dies ist besonders vorteilhaft, weil elektrische Energie in dem Windpark erzeugt wird und damit ohne weiteres zur

Verfügung steht und dadurch der Transport anderer Energieträger wie Kraftstoff überflüssig wird. Auch lassen sich Elektromotoren auf einfache Weise steuern.

Die Seilverbindung besteht zweckmäßigerweise aus einem Tragseil und einem Zugseil. Dabei ist die Gondel zwar auf dem Tragseil gelagert, aber gegenüber diesem verfahrbar. Das Zugseil ist an der Gondel befestigt. Ein Ziehen der Zugseiles entsprechend der gewünschten Fahrtrichtung bewegt die Gondel entlang des Tragseiles in der gewünschten Richtung. Dieses Ziehen des Zugseiles kann motorbetrieben erfolgen. Als Antriebsenergie wird vorteilhaft elektrische Energie eingesetzt.

Die Umlenkvorrichtung besteht bevorzugt aus zwei unabhängig voneinander drehbaren Umlenkrollen, wobei über eine Rolle das Tragseil geführt ist und über die andere Rolle das Zugseil. Dabei kann das Zugseil als umlaufendes Endlosseil ausgebildet sein, während das Tragseil nur einmal entlang der von der Gondel befahrbaren Strecke vorgesehen sein kann. Durch das endlose Zugseil genügt ein richtungsumschaltbarer Antrieb für das Zugseil, um die Gondel in der gewünschten Richtung zu verfahren, und auf Aufwickelvorrichtungen für das Zugseil an beiden Enden desselben kann verzichtet werden.

In einer besonders bevorzugten Ausführungsform der Erfindung bewegt sich die Gondel aus eigener Kraft entlang der Tragseiles. Dabei kann ein motorischer Antrieb und bevorzugt ein elektromotorischer Antrieb vorgesehen sein, wobei der Energievorrat zum Antrieb des Motors in einem Energiespeicher wie z. B. einem Akkumulator in der Gondel vorgesehen ist.

Ein manueller Antrieb kann alternativ zu dem motorischen Antrieb oder ergänzend als Notantrieb vorgesehen sein, um auch bei Ausfall des Motors oder des Energievorrats die Gondel im Notbetrieb bewegen zu können.

In einer insbesondere bevorzugten Ausführungsform der Erfindung wird bei dem elektrischen Gondelantrieb die Antriebsenergie über die Seilverbindung bzw. das Tragseil, das Zugseil und/oder einen separaten Leiter zugeführt. Dabei können auch Steuerungssignale von einer Fernsteuerung auf diesem Weg zu der Gondel und/oder einem Turm übertragen werden, um z. B. den Antriebsmotor oder eine Winde oder ähnliches zu steuern.

In einer bevorzugten Weiterbildung der Erfindung werden über die elektrische Verbindung z. B. Telematikdaten zu einer zentralen Windenergieanlage oder zu mehreren Windenergieanlagen übertragen. Darüber hinaus kann eine Kommunikation aller Windenergieanlagen des Windparks, zwischen denen die Seilbahn vorgesehen ist, untereinander sowie mit der Gondel über die Seilverbindung abgewickelt werden.

In einer alternativen Ausführungsform der Erfindung kann diese Kommunikation, also die Übertragung z. B. von Telematikdaten, Steuerungssignalen, etc. zwischen einzelnen Windenergieanlagen des Windparks und/oder der Gondel wenigstens teilweise drahtlos erfolgen.

Die Führung der Seilverbindung kann auf unterschiedliche Weise erfolgen. Eine einfache Weise ist das Perlenschnur-Prinzip, bei dem alle Windenergieanlagen wie "an einer Perlenschnur aufgereiht" durch die Seilverbindung untereinander verbunden sind. Die Seilverbindung verbindet dabei als eine einzelne durchgehende Seilverbindung in einer vorgebbaren Reihenfolge wenigstens einen Teil der Windenergieanlagen miteinander.

Dabei können die Windenergieanlagen jedoch auch in mehreren Reihen aufgestellt sein, z. B. in drei Reihen, und die Seilverbindung verläuft z. B. in der Form des Buchstaben "S" zwischen den Windenergieanlagen und verbindet die Anlagen untereinander.

Eine alternative Variante der Seilführung ist eine sternförmige Anordnung der Seilverbindung, ausgehend von einer zentralen Windenergieanlage, die z. B. einen zentralen Anlegepunkt darstellt, um so alle anderen Windenergieanlagen auf einem kürzestmöglichen Weg zu erreichen.

Eine weitere Variante ist eine netzartige Seilführung, die nicht nur eine kürzestmögliche Verbindung von einer zentralen Windenergieanlage aus zu den übrigen Windenergieanlagen bietet, sondern zwischen allen Windenergieanlagen relativ kurze Strecken bildet.

Um während der Fahrt der Gondel zwischen den Windenergieanlagen eines Windparks die horizontale Auslenkung der Gondel an der Seilverbindung gering zu halten bzw. in bestimmten Grenzen zu verhindern, weist der erfindungsgemäße Windpark in einer bevorzugten Weiterbildung ein Halteseil auf, dass in einem vorgegebenen vertikalen Abstand parallel zu der Seilverbindung vorgesehen ist. Der Abstand ist dabei so bemessen, dass die Gondel zwischen der Seilverbindung und dem Halteseil geführt ist. Dabei verläuft die Seilverbindung bevorzugt oberhalb der Gondel und das Halteseil unterhalb der Gondel.

In einer besonders vorteilhaften Weiterbildung der Erfindung kann bei einer als Endlosseil ausgebildeten Seilverbindung der eine (obere) Teil der Endlos-Seilverbindung die Gondel tragen, während der andere (untere) Teil der Endlos-Seilverbindung die Funktion des Halteseiles übernimmt.

In einer alternativen Ausführungsform wird zur Stabilisierung der Gondel eine um eine vertikale Achse rotierende Schwungmasse eingesetzt. Diese Schwungmasse wird motorisch angetrieben und wirkt als Kreisel jeder horizontalen Auslenkung der Gondel entgegen.

Bevorzugt weist jede Windenergieanlage des Windparks in Ihrem Turm eine verschließbare Tür auf. Diese Tür befindet sich im Wesentlichen in der Höhe, in welcher die Gondel die Windenergieanlage erreicht. Dadurch Ladetätigkeiten möglich, ohne einen Höhenunterschied überwinden zu müssen.

In einer bevorzugten Weiterbildung verfügen die Windenergieanlage und die Gondel über eine Arretierung, die ein Festlegen der Gondel in der Be- und Entladeposition gestattet, so dass Schwingungen der Gondel relativ zum Turm der Windenergieanlage in dieser Position verhindert werden. Dabei ist die Arretierung bevorzugt so ausgebildet, dass ein Teil der Arretierung nahe der Tür am Turm der Windenergieanlage und der andere Teil an einer geeigneten Position an der Gondel vorgesehen ist. Besonders bevorzugt ist die Arretierung eine Zweipunkt-Arretierung, um die Ausbildung eines Drehpunktes bei einer Arretierung an nur einem Punkt zu vermeiden.

Diese Arretierung kann bevorzugt elektromagnetisch wirken und durch Betätigen eines Schalters im Turminneren und/oder von der Gondel aus ein- bzw. ausgeschaltet werden. Dadurch ist eine komfortable und sichere Handhabung auch ohne dass Verletzungsrisiko durch eine schwankenden Gondel, die unter Umständen z. B. durch Windeinwirkung mit dem Turm kollidiert, möglich.

In einer bevorzugten Weiterbildung der Erfindung ist die Arretierung fernbedienbar und insbesondere bevorzugt von der Gondel aus fernbedienbar ausgebildet, so dass ein manueller Eingriff vermieden werden kann. Dadurch wird ein latent vorhandenes Verletzungsrisiko beim Handhaben der Arretierung weiter verringert.

Besonders bevorzugt ist wenigstens an einer Windenergieanlage oberhalb der Öffnung eine im Wesentlichen horizontal verlaufende Abdeckung angebracht, die an der turmabgewandten. Seite eine im Wesentlichen vertikal und in einem vorgegebenen Abstand parallel zur Seilverbindung verlaufende Schutzwand trägt. Durch die Abdeckung und die Schutzwand , die einen vorgegebenen Winkel einschließen, wird ein Schutzdach gebildet, das die Gondel im Bereich der Öffnung und die Öffnung selbst vor Witterungseinflüssen schützt. Dadurch ist die Gondel bzw. die Öffnung einerseits durch den Turm selbst und andererseits durch das Schutzdach so geschützt, dass selbst dann, wenn die Seite, in der die Öffnung ausgebildet ist, die Luvseite ist, der Wind abgeschirmt wird und die Gondel nicht gegen den Turm drückt.

Durch eine ausreichend lange Ausbildung des Schutzdaches kann auch bei Wind bzw. Windkomponenten quer zur Fahrtrichtung der Gondel eine entsprechende Auslenkung der Gondel und somit eine mögliche Kollision mit dem Turm vermieden werden.

Dabei ist der horizontale Abstand der äußeren Enden der ersten Schutzwand zum Turm bevorzugt größer als der horizontale Abstand des mittleren Abschnittes der Schutzwand. Auf diese Weise wird eine Kollision zwischen Gondel und Schutzwand auch dann verhindert, wenn die Gondel z. B. durch Seitenwind horizontal zu der Schutzwand hin ausgelenkt wird.

In einer bevorzugten Weiterbildung der Erfindung können beiderseits der Öffnung parallel zu der Schutzwarid und in der gleichen Höhe am Turm weitere Schutzwände angebracht sein, die einen Windschatten des Turmes so weit verlängern, dass eine Windkomponente quer zur Fahrtrichtung der Gondel diese nicht gegen die äußere Schutzwand drückt. Dabei kann der horizontale Abstand zwischen den Schutzwänden im Bereich des Turmes im Wesentlichen der Breite der Gondel entsprechen und sich zu den seitlichen Enden der Schutzwände hin erweitern, so dass eine vertikale Auslenkung der Gondel im Bereich der Einfahrt zwischen die Schutzwände nicht zur Kollision zwischen der Gondel und einer der Schutzwände führt.

Die Gondel selbst kann bevorzugt im unteren Bereich der Gondelkabine an jeder der Ecken, und damit an den Stellen, bei denen eine Kollision mit anderen Einrichtungen des Windparks zuerst zu besorgen sind, wenn die Gondel horizontal ausgelenkt wird, mit elastischen Beschichtungen versehen sein. Diese Beschichtungen dämpfen einerseits eine eventuelle Kollision und beugen somit Beschädigungen an der Gondel und den anderen Einrichtungen des Windparks vor; und können andererseits als Auftriebshilfen dienen, um die Gondel im Falle eines Unfalles schwimmfähig zu halten.

Gleichzeitig mit oder an Stelle der elastischen Beschichtung an der Gondel kann eine solche Beschichtung auch an den Schutzwänden insbesondere im Einfahrbereich in einer Höhe vorgesehen sein, in welcher eine horizontal ausgelenkte Gondel zuerst mit der Schutzwand kollidiert.

Besonders bevorzugt ist an der zweiten Schutzwand ein erster Steg vorgesehen, der an seinem gesamten Umfang eine Rückhaltevorrichtung wie ein Geländer aufweist. Dieser Steg erstreckt sich in einer vorteilhaften Weiterbildung der Erfindung über die gesamte Länge der Schutzwand und ist so angebracht, dass er von der Öffnung aus erreichbar ist.

Auf diese Weise ist die Außenseite der Gondel z. B. für Reparaturarbeiten und/oder Wartungs- und Reinigungsarbeiten zugänglich. Soweit die zweite Schutzwand vorhanden ist, kann der Steg an einer Seite durch diese Schutzwand begrenzt werden und dort kann auf eine Rückhaltevorrichtung verzichtet werden.

Besonders bevorzugt ist an der ersten Schutzwand ein zweiter Steg vorgesehen, der parallel zu dem ersten Steg verläuft. Auch dieser zweite Steg weist an den nicht an der ersten Schutzwand anliegenden Seiten eine Rückhaltevorrichtung auf.

Weiterhin bevorzugt kann an wenigstens einem äußeren Ende des ersten bzw. des zweiten Steges ein quer dazu verlaufender Steg vorgesehen sein, der den Abstand der im Wesentlichen parallel verlaufenden ersten und zweiten Stege überbrückt.

Um eine ungehinderte Ein- und Ausfahrt der Gondel zu ermöglichen, kann der quer verlaufende Steg an einer seiner Stirnseiten schwenkbar angelenkt sein und um die Schwenkachse herum nach oben geschwenkt werden, um die Durchfahrt für die Gondel freizugeben. In einer vorteilhaften Weiterbildung der Erfindung sind an beiden Enden des ersten Steges oder des zweiten Steges solche quer verlaufenden Stege schwenkbar angelenkt und ermöglichen so das Erreichen jeder Seite der Gondel von außen.

Der Abstand der quer verlaufenden Stege zueinander ist bevorzugt so gewählt, dass er im Wesentlichen der entsprechenden Abmessung der Gondel entspricht. In einer besonders bevorzugten Weiterbildung der Erfindung ist wenigstens einer der quer verlaufenden Stege entlang seiner Schwenkachse verschiebbar, so dass der Abstand zwischen den quer verlaufenden Stegen veränderbar und so an die jeweiligen Erfordernisse anpassbar ist.

An wenigstens einem Turm einer Windenergieanlage kann bevorzugt unter dem Schutzdach eine Lasthebevorrichtung vorgesehen sein, die einerseits die Handhabung von schwerem Transportgut und andererseits die Handhabung der Gondel bzw. von Gondelteilen, z. B. zu Reparaturzwecken, gestattet. Durch eine solche Lasthebeeinrichtung kann bei geeigneter Auslegung die gesamte Gondel angehoben werden, damit auch die Unterseite der Gondel von den Stegen aus für Reparatur-, Wartungs- und Reinigungszwecke erreichbar ist.

In einer alternativen Ausführungsform der Erfindung kann an Stelle von Stegen eine geeignet befestigte, ein- oder mehrteilige Arbeitsplattform vorgesehen sein, um die Außenseiten der Gondel zu erreichen. Dazu kann die Grundfläche der Arbeitsplattform eine Mindestgröße aufweisen, die einen allseitigen Zugang zu der Gondel von außen ermöglicht.

In einer weiteren alternativen Ausführungsform der Erfindung kann ein Arbeitskorb oder eine Arbeitsbühne vorgesehen sein, der/die derart verfahrbar bzw. verschwenkbar ist, dass die Außenseiten der Gondel erreichbar sind. Dabei ist die Arbeitsbühne, ebenso wie die Arbeitsplattform allseitig von einer Rückhalteeinrichtung umschlossen, um einen unbeabsichtigten Absturz von der der Plattform bzw. der Bühne arbeitendem Personal zu verhindern.

In einer besonders bevorzugten Ausführungsform der Erfindung ist die Tür größer als der Gondelquerschnitt und die Seilführung verläuft bis in den Turm der Windenergieanlage hinein. Dazu ist an jedem Turm im Verlauf der Seilverbindung wenigstens eine Weiche vorgesehen. Auf diese Weise kann die Gondel durch die geöffnete Tür in den Turm hineinfahren und dort unabhängig von der Witterung Be- und/oder Entladen werden.

Ein im Wesentlichen vor Witterungseinflüssen geschützter Transport von Personen und Gütern wird durch eine geschlossene Gondel verwirklicht. Dabei ist in einer besonders bevorzugten Weiterbildung der Erfindung die Gondel so ausgebildet, dass sie eine verschließbare Ausstiegsöffnung aufweist, durch welche die Führung, mit welcher die Gondel an der Seilverbindung aufgehängt und geführt ist, erreichbar ist.

Um im Fall eines Absturzes einer Gondel einen Verlust der Gondel zu vermeiden, ist die Gondel bevorzugt schwimmfähig ausgebildet und kann über Signalmittel wie Signalpistolen, Fackeln o. ä. sowie Auftriebshilfen wie selbsttätig aufblasende Schwimmringe verfügen. Diese Auftriebshilfen erhöhen den Auftrieb der Gondel, so dass diese auch beladen schwimmfähig bleibt. In einer bevorzugten Weiterbildung der Erfindung besitzt die Gondel Aufrichthilfen, die ein Umschlagen der Gondel wenigstens erschweren oder sogar verhindern.

Um eine Betriebsüberwachung oder eine wenigstens teilweise automatisierte Steuerung der Seilbahn zu verwirklichen, sind eine zentrale Steuerungsvorrichtung sowie mehrere Sensoren und/oder Aktuatoren vorgesehen. Dabei können die Sensoren und/oder Aktuatoren über eine Schnittstelle mit der zentralen Steuerungsvorrichtung verbunden sein.

Die zentrale Steuerungsvorrichtung kann somit einerseits durch angeschlossene Sensoren einerseits bestimmte Betriebsparameter und -zustände wie z. B. die Position der Gondel, die Fahrgeschwindigkeit, die horizontale Auslenkung, das Gondelgewicht, die Rotationsgeschwindigkeit einer Schwungmasse, der Energievorrat, Motorbetriebsdaten, die Öffnungen in den Türmen (verschlossen, offen,...), etc., erfassen. Selbstverständlich können auch Telematikdaten von Sensoren im Maschinenhaus einer Windenergieanlage erfasst und verarbeitet werden.

Durch die vorgesehenen Aktuatoren kann die zentrale Steuerungseinheit Betriebsparameter und -zustände beeinflussen. Dies kann z. B. die Steuerung der Arretierung zwischen Gondel und Turm in Abhängigkeit von der Position der Gondel relativ zum Turm oder die Steuerung der Beleuchtung unter dem Schutzdach sein, ebenso wie die Steuerung einer Positionsbefeuerung (sofern diese an den Türmen und/oder anderen Teilen des Windparks vorgesehen ist) in Abhängigkeit von der Helligkeit oder die automatische Freigabe bzw. Betätigung von Türen oder die Beeinflussung der Fahrgeschwindigkeit der Gondel bis hin zum Anhalten sein.

In einer alternativen Ausführungsform der Erfindung kann die Steuerung dezentralisiert sein. Dazu können separate Steuerungen in wenigstens zwei der Windenergieanlagen eines Windparks vorgesehen sein, die untereinander und mit der Gondel kommunizieren. Auf diese Weise können ebenfalls Betriebsparameter und -zustände erfasst und ausgewertet werden. Dabei kann jede Steuerung mit einem vorgebbaren Teil der Sensoren und/Aktuatoren verbunden sein. Ein Vorteil dieser dezentralen Lösung ist die damit vorhandene Redundanz, so dass bei Ausfall einer Steuerungseinheit benachbarte Steuerungseinheiten deren Funktionen übernehmen können.

In einer besonders vorteilhaften Weiterbildung der Erfindung sind zwischen Windenergieanlagen eines Windparks Tragmasten vorgesehen, welche die Seilverbindung tragen und so einen übermäßigen Durchhang der Seilverbindung zwischen den Türmen und die damit einhergehende Belastung vermeiden, die sich in Folge großer Spannfeld-Weiten zwischen den Türmen der Windenergieanlagen eines Windparks ergeben können.

Der erfindungsgemäße Windpark ist bevorzugt mit wenigstens einem Aufenthaltsbereich zur Beherbergung wenigstens einer Person ausgestattet. Dabei ist dieser Aufenthaltsbereich bevorzugt räumlich in verschiedene Funktionsbereiche wie einen Sanitärbereich und/oder einen Küchenbereich und/oder einen Vorratsbereich und/oder einen Ruhebereich gegliedert und ist besonders bevorzugt in den Turm einer Windenergieanlage integriert.

In einer alternativen Ausführungsform der Erfindung ist der Aufenthaltsbereich getrennt von den Windenergieanlagen jedoch innerhalb des Windparks angeordnet. Dies kann z. B. auf einer separaten Plattform oder bevorzugt auf einer an einem Turm einer Windenergieanlage angebrachten Plattform sein.

Dabei kann diese Plattform weitere Funktionen wie diejenige eines Hubschrauberlandeplatzes und/oder eines Schiffsanlegers verwirklichen.

Aufgrund der begrenzten Grundfläche innerhalb des Turmes ist der Aufenthaltsbereich in einer bevorzugten Weiterbildung der Erfindung auf mehrere miteinander verbundene Ebenen innerhalb des Turmes verteilt. Dabei sind innerhalb des Aufenthaltsbereiches Vorrichtungen zur Kommunikation und zur Signalisierung vorgegebener Daten vorgesehen. Diese Signalisierung kann eine akustische und eine optische Signalisierung ebenso wie eine Aufzeichnung der Daten in einer geeigneten Weise umfassen.

Die Kommunikation umfasst Sprach- und/oder Datenkommunikation auf leitungsgebundenen oder drahtlosen Kommunikationswegen, einerseits mit Gegenstellen außerhalb des Windparks, wie entfernten Betriebs- oder

Wartungszentralen, und andererseits mit Gegenstellen innerhalb des Windparks, wie z.B. anderen Windenergieanlagen oder der Gondel der Seilbahn.

Darüber hinaus umfasst die Kommunikation in einer besonders bevorzugten Ausführungsform der Erfindung auch die Beeinflussung von vorgegebenen Betriebsparametern der Anlagen des Windparks sowie eine Überwachung des Windparkbetriebes und dessen Steuerung. Auf diese Weise kann eine kontinuierlich besetzte Wachstation in dem erfindungsgemäßen Windpark geschaffen werden, die im Falle von Störungen sofort reagieren und geeignete Maßnahmen ergreifen bzw. einleiten kann.

In einer besonders bevorzugten Weiterbildung der Erfindung ist eine Wasseraufbereitungsanlage zur Trink- und Brauchwasser-Versorgung des Personals vorgesehen, die mit in dem Windpark erzeugter elektrischer Energie betrieben wird. Dabei kann zur Überbrückung von Versorgungslücken, z. B. durch eine Flaute, ein geeignet dimensionierter Energiespeicher vorgesehen sein, um wenigstens einen Notbetrieb zur Versorgung des Aufenthaltsbereiches mit Energie und Wasser aufrecht zu erhalten.

Als Energiespeicher können dabei elektrische Speicher wie Kondensatoren, chemische Speicher wie Akkumulatoren oder auch Wasserstoffspeicher verwendet werden, die mit Wasserstoff beschickt werden, der durch Elektrolyse aus Meerwasser gewonnen wird, und aus dem in einer Brennstoffzelle wieder elektrische Energie gewonnen werden kann.

In einer insbesondere bevorzugten Ausführungsform der Erfindung umfasst wenigstens die mit dem Aufenthattsbereich ausgestattete Windenergieanlage Vorrichtungen zur Wetterbeobachtung bzw. zur Erfassung, Auswertung, Aufzeichnung und/oder Weiterleitung meteorologischer Daten. Weiterhin kann die Windenergieanlage oder weitere (alle) Anlagen des Windparks Funktionen einer

Navigationshilfe für die Schifffahrt z. B. in Form eines Seezeichens oder als Station zur (Erst-) Versorgung von Verunglückten bzw. Schiffbrüchigen übernehmen.

In einer Weiterbildung weist wenigstens eine mit einem Aufenthaltsbereich ausgestattete Windenergieanlage eine Aussichtsplattform auf, die unterhalb des Maschinenhauses am Turm der Windenergieanlage vorgesehen ist. Diese Aussichtsplattform kann den Turm der Windenergieanlage vollständig oder wenigstens teilweise in einer Vorzugsrichtung umschließen und mit Fenstern ausgestattet sein, die eine Beobachtung der Umgebung ermöglichen. Weiterhin kann diese Aussichtsplattform wiederum mit Vorrichtungen zur Signalisierung von Daten, zur Beeinflussung vorgegebener Betriebsparameter und/oder zur Kommunikation ausgestattet sein. Die Windeneregieanlage mit der Aussichtsplattform ist so innerhalb des Windparks plaziert, dass von dort eine maximale (alle) Anlage des Windparks zu sehen ist.

Dabei kann die Aussichtsplattform in räumlicher Nähe zu dem Aufenthaltsbereich vorgesehen bzw. in diesen integriert sein. Alternativ können die Aussichtsplattform und der Aufenthaltsbereich räumlich voneinander getrennt sein und der Aufenthaltsbereich befindet sich unterhalb der Aussichtsplattform im Bereich des Turmfußes, um eine großzügigere Abmessung der Räume zu erlauben, während die Aussichtsplattform dicht unterhalb des Maschinenhauses vorgesehen ist, um eine gute Beobachtung der Umgebung zu ermöglichen.

Bei einer großen Entfernung zwischen der Aussichtsplattform und dem Aufenthaltsbereich kann ein Aufzug innerhalb des Turmes vorgesehen sein, um bei täglich mehrmaligem Zurücklegen der Strecke zwischen der Aussichtsplattform und dem Aufenthaltsbereich einerseits Zeit zu sparen und andererseits die körperliche Belastung für das Personal zu beschränken. Dabei kann der Aufzug wenigstens mit einer Notrufeinrichtung ausgestattet sein, um im Falle einer Störung Hilfe heranrufen zu können.

Bevorzugte Weiterbildungen der Erfindung sind in den Unteransprüchen angegeben. Im Folgenden wird eine Ausführungsform der Erfindung näher erläutert. Dabei zeigen:
- Fig. 1: eine erste Variante der Seilführung in einem Windpark;
- Fig. 2: eine zweite Variante der Seilführung in einem Windpark;
- Fig. 3: eine dritte Variante der Seilführung in einem Windpark;
- Fig. 4: den Verlauf der Seilverbindung zwischen zwei Windenergieanlagen;
- Fig. 5: eine alternative Seilanordnung;
- Fig. 6: Aufhängung und Antrieb der Gondel mittels Tragseil und Zugseil;
- Fig. 7: eine Draufsicht auf eine Windenergieanlage mit einem Schutzdach; und
- Fig. 8: eine Seitenansicht des Turmes mit dem Schutzdach.

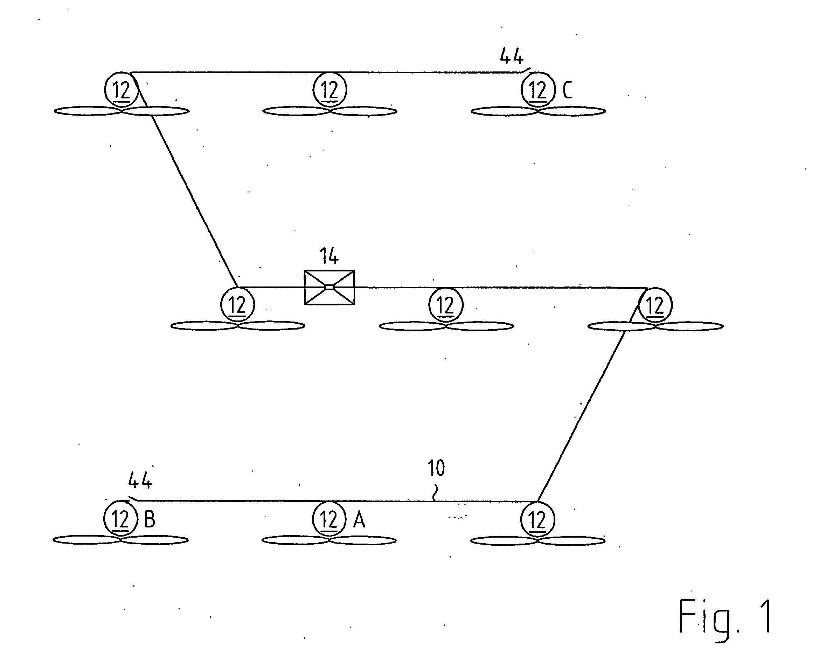

Figur 1 zeigt einen Windpark mit neun Windenergieanlagen 12. Diese Windenergieanlagen 12 sind in drei Reihen mit jeweils drei Anlagen 12 angeordnet und durch eine Seilverbindung 10 untereinander derart verbunden, dass die Gondel 14 die einzelnen Windenergieanlagen 12 einzeln nacheinander erreichen kann. Die Gondel 14 passiert also bei der Fahrt von einem Endpunkt der Seilverbindung 10 zu dem anderen Endpunkt der Seilverbindung 10 stets sämtliche Windenergieanlagen 12 des Windparks.

Dabei kann die Seilverbindung 10 in einer Endlosschleife geführt sein, an welcher die Gondel 14 fest angeordnet ist. Durch Verfahren des Seiles kommt es also zwangsweise auch zum Verfahren der Gondel 14.

Liegt die Endlosschleife dabei in einer im Wesentlichen horizontalen Ebene, kann der Seilantrieb im einfachsten Fall in einer stets gleichbleibenden Richtung erfolgen und die Gondel 14 bewegt sich nach Passieren des Umlenkpunktes um die horizontale Abmessung der Endlosschleife versetzt in der entgegengesetzten Richtung.

Da dies jedoch auch bei einer Fahrt von einer Windenergieanlage 12 zu einer entgegen der Fahrtrichtung benachbarten Windenergieanlage 12 gilt, kann dadurch ein Passieren aller übrigen Windenergieanlagen des Windparks erforderlich werden, so dass die Gondel fast zweimal die Länge Seilverbindung 10 zurücklegen muss. Befindet sich die Gondel 14 beispielsweise an der mit A bezeichneten Windenergieanlage 12 und soll nun zu der mit B bezeichneten Anlage fahren, so muss sie bei unidirektionalem Seilantrieb zunächst bis zu der mit C bezeichneten Windenergieanlage 12 und von dort zurück zu der Zielanlage B fahren. Dabei passiert sie annähernd zwei mal die Seilverbindung in ihrer gesamten Länge.

Ist ein Antrieb der Seilverbindung in zwei Richtungen möglich, genügt für die Fahrt von A nach B eine Richtungsumschaltung der Fahrtrichtung und eine kurze Fahrt zwischen zwei Anlagen.

Bei einer im Wesentlichen in einer vertikalen Ebene verlaufenden Endlosschleife der Seilverbindung 10 ist ein Antrieb der Seilverbindung 10 in zwei Richtungen unbedingt erforderlich, da sonst die fest mit der Seilverbindung 10 verbundene Gondel 14 spätestens am Umkehrpunkt der Endlosschleife in eine gefährliche Situation käme.

Daher sind in der Figur an den mit B und C bezeichneten Windenergieanlagen Sensoren 44 vorgesehen, die ein Erreichen dieser Position durch die Gondel 14 erfassen, und somit einen Anhalte- oder Umlenkvorgang auslösen können. Der Einfachheit halber sind diese Sensoren als Schalter dargestellt. Natürlich eigenen sich auch andere Arten von Sensoren wie z. B. Hall-Sensoren, optische Sensoren, etc. zur Bestimmung, ob die Gondel 14 diese Position erreicht hat. Dabei ist die Position der Sensoren natürlich so gewählt, dass auch die beladener Gondel 14 ein ausreichender Anhalteweg zur Verfügung steht.

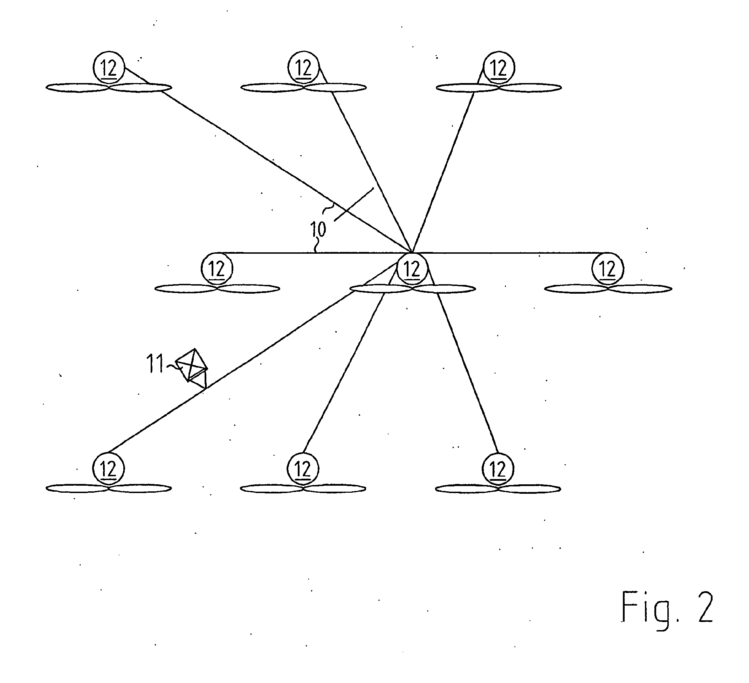

In Figur 2 ist ebenfalls ein Windpark mit neun Windenergieanlagen 12 dargestellt, die in drei Reihen mit jeweils drei Anlagen 12 angeordnet sind. Hier ist eine zentrale Anlage 12 vorgesehen, die z. B. besondere Anlege- und Lagereinrichtungen aufweisen kann. Von dieser zentralen Windenergieanlage 12 aus verlaufen Seilverbindungen 10 sternförmig zu allen anderen Windenergieanlagen 12 des Windparks. Dadurch ergeben sich für die (in dieser Figur nicht dargestellte) Gondel 14 die kürzestmöglichen Wege zum Erreichen der anderen Windenergieanlagen 12 - jeweils von der zentralen Anlage 12 ausgehend.

Eine Fahrt von einer nicht zentralen Windenergieanlage 12 zu einer anderen, ebenfalls nicht zentralen Windenergieanlage 12 führt jedoch stets zunächst zu der zentralen Windenergieanlage 12 und davon weiter zu der gewünschten Ziel-Windenergieanlage 12.

In dieser Figur ist weiterhin ein Stützmast 11 an einer Seilverbindung 10 dargestellt. Dieser Stützmast 11 trägt die Seilverbindung 10 und verhindert dadurch bei großen Spannfeldlängen zwischen zwei Windenergieanlagen 12 einen zu großen Durchhang der Seilverbindung 10.

Dieser Durchhang ergibt sich aus dem Eigengewicht der Seilverbindung. Abhängig von den Eigenschaften der Seilverbindung 10 ergibt sich eine maximale Entfernung zwischen zwei Stützpunkten für die Seilverbindung 10, bei deren Überschreiten die Seilverbindung 10 bereits durch ihr Eigengewicht reißen kann. Aber auch bei einer geringeren Entfernung kann der Durchhang der Seilverbindung 10 bereits zu groß sein und die Gondel 14 der Wasseroberfläche zu nahe kommen.

Dem ließe sich theoretisch durch eine höhere Spannung in der Seilverbindung 10 entgegenwirken. Kommt es dann jedoch z. B. in Folge von Kälteeinwirkung zu einer höheren Spannung in der Seilverbindung 10, kann die Reißfestigkeit überschritten werden und die Seilverbindung 10 reißt. D. h., ein bestimmter, materialabhängiger Durchhang der Seilverbindung 10 ist unvermeidbar durch den Einsatz von Stützmasten 11 können diese Probleme gelöst werden.

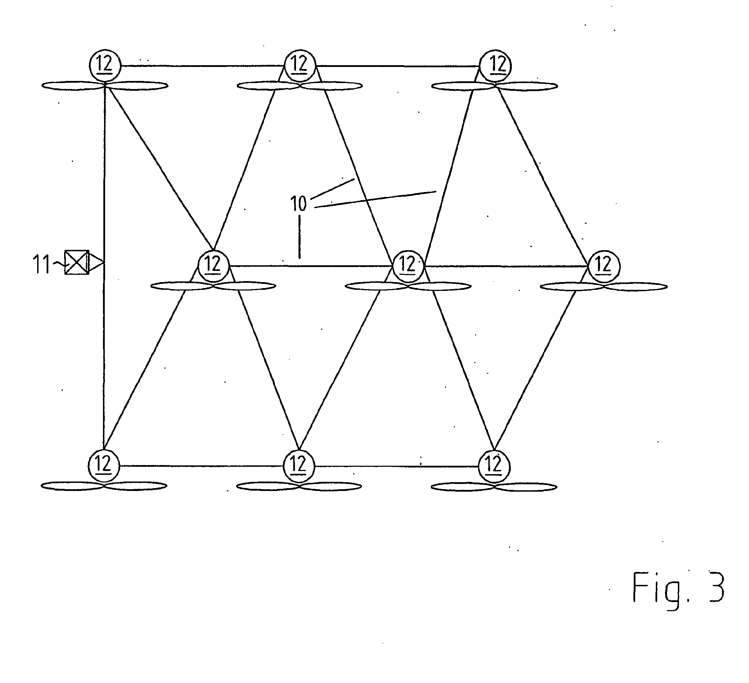

Figur 3 zeigt die gleiche Anordnung der Windenergieanlagen 12 wie die Figuren 1 und 2. Der Unterschied besteht wiederum in der Führung der Seilverbindung 10 zwischen den Windenergieanlagen 12. Diese ist in der vorliegenden Figur 3 netzartig ausgebildet, so dassjede Windenergieanlage 12 einen Knotenpunkt bildet. Durch diese Seilführung ergeben sich für einzelne Fahrstrecken noch kürzere Entfernungen, über welche die (in der Figur nicht dargestellte) Gondel 14 einzelne Windenergieanlagen 12 erreichen kann.

Auch in dieser Figur ist in einem großen Spannfeld zwischen zwei Windenergieanlagen 12 ein Stützmast 11 vorgesehen, um den Durchhang und die Spannung in der Seilverbindung 10 zu begrenzen. Dabei ist der Einsatz von Stützmasten 11 natürlich in jedem Abschnitt der Seilverbindung 10 zwischen zwei Windenergieanlagen 12 möglich, um zusätzliche Tragepunkte für die Seilverbindung 10 zu gewinnen.

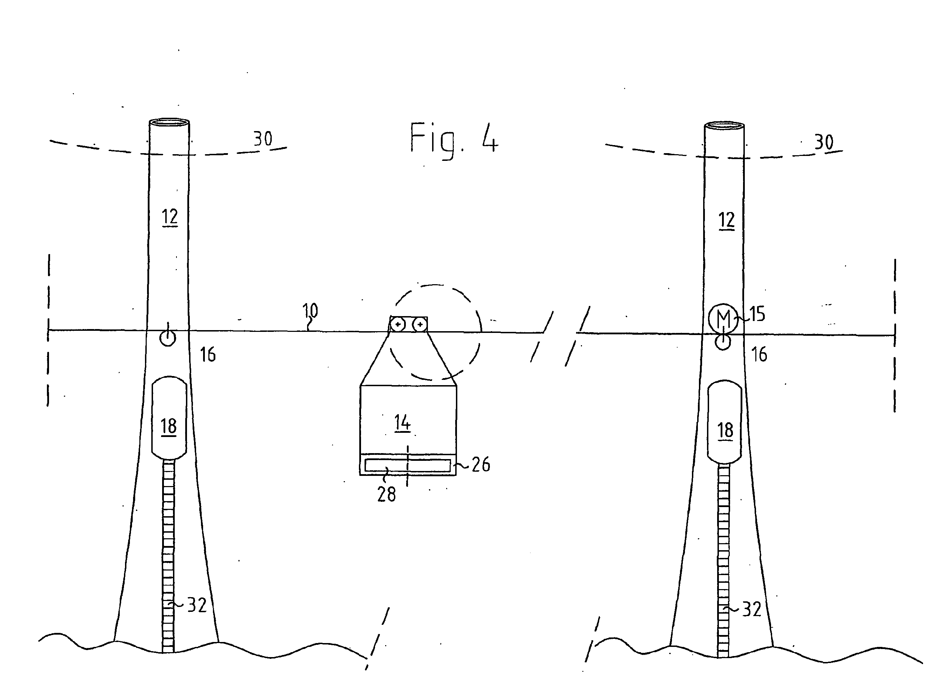

In Figur 4 sind zwei Windenergieanlagen 12 gezeigt, die durch eine Seilverbindung 10 miteinander verbunden sind. Die oberen Abschnitte der Türme sind in der Figur ausgelassen, der untere Rand des Rotorkreises ist jedoch durch eine gestrichelte Linie 30 dargestellt. Jeder der Türme weist eine mit einer Tür verschließbare Öffnung 18 auf, von der aus jeweils eine Steigleiter 32 zum Turmfuß vorgesehen ist. Dabei ist die Öffnung 18 im Turm in der Höhe vorgesehen, in welcher die Gondel 14 den Turm erreicht.

An jedem Turm ist oberhalb der Öffnung 18 eine Umlenkvorrichtung 16 vorgesehen, durch welche die Seilverbindung 10 geführt ist. An dieser Seilverbindung 10 befindet sich die Gondel 14. Dabei wird die Gondel 14 je nach Ausführungsform der Seilverbindung 10 von der Seilverbindung getragen und/oder verfahren, oder die Gondel 14 bewegt sich aus eigener Kraft entlang der Seilverbindung 10.

In dem dargestellten Beispiel befindet sich an einem Turm einer Windenergieanlage 12 oberhalb der Umlenkrolle 16 ein Antriebsmotor 15, der im Falle einer nicht selbstfahrenden Gondel 14 die Seilverbindung 10 in geeigneter Weise verfahren kann.

Im unteren Teil der Gondel 14 befindet sich ein zusätzliches Fach 26, dass durch den Boden des Gondelkorbes von diesem getrennt ist. In diesem Zusatzfach 26 befindet sich eine Schwungmasse 28, die um ihre gestrichelt eingezeichnete Rotationsachse durch einen motorischen Antrieb auf einer hohen Drehzahl gehalten wird. Durch die Rotation wirkt die Schwungmasse 28 als Kreisel und stabilisiert die Gondel 14 ihrer Position, indem sie einer vertikalen Auslenkung der Gondel 14 entgegenwirkt. Dadurch wird die Fahrt der Gondel 14 auch bei quer zur Fahrtrichtung auftretendem Wind stabilisiert und die Gondel wird nur in einem begrenzten Umfang ausgelenkt.

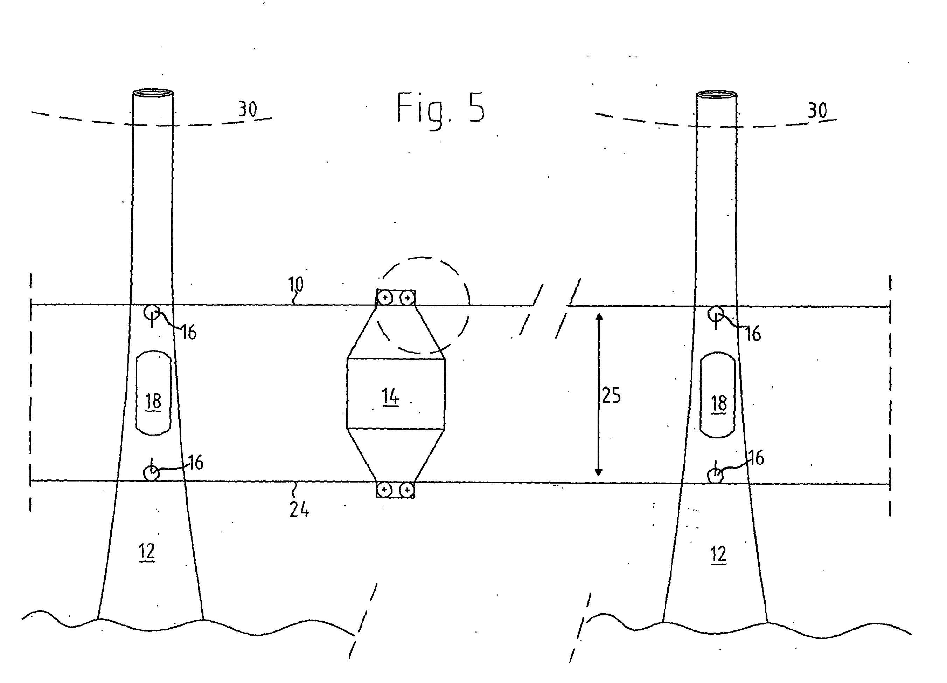

Die Darstellung in Figur 5 zeigt ebenfalls zwei Türme von Windenergieanlagen 12, deren obere Abschnitte in der Figur ausgelassen wurden. Der untere Teil des Rotorkreises 30 ist aber wiederum dargestellt. In den Türmen sind die verschließbaren Öffnungen 18 in der Höhe dargestellt, in welcher die Gondel 14 die Windenergieanlage 12 erreicht.

Oberhalb der Öffnung 18 befinden sich Umlenkvorrichtungen 16, durch welche die Seilverbindung 10 geführt ist. An dieser Seilverbindung 10 ist die Gondel 14 angeordnet und kann zwischen den Windenergieanlagen verfahren werden.

Unterhalb der Öffnungen 18 sind ebenfalls Umlenkvorrichtungen 16 vorgesehen. Durch diese zusätzlichen Umlenkvorrichtungen 16 ist eine weitere Seilverbindung als Halteseil 24 geführt. Dieses Halteseil 24 verläuft in einem vorgegebenen vertikalen Abstand 25 parallel zu der Seilverbindung 10 und führt die Gondel 14. Auf diese Weise wird die horizontale Auslenkung der Gondel 14 begrenzt, da sie sowohl oben wie auch unten durch Seile 10, 24 geführt ist

Dabei variiert die mögliche horizontale Auslenkung der Gondel 14 abhängig von der Entfernung zur nächsten Windenergieanlage 12. Mit sinkender Entfernung zwischen Gondel 14 und Windenergieanlage 12 steigt die Wirkung der Umlenkvorrichtungen 16 an und die mögliche horizontale Auslenkung der Gondel 14 ist entsprechend gering, während bei zunehmender Entfernung zwischen der Gondel 14 und einer Windenergieanlage 12 der Durchhang der Seilverbindung 10 und des Halteseiles 24 zunimmt. In der Mitte der Strecke zwischen zwei Windenergieanlagen 12 ist der Durchhang am Größten und damit die größtmögliche horizontale Auslenkung der Gondel 14 möglich.

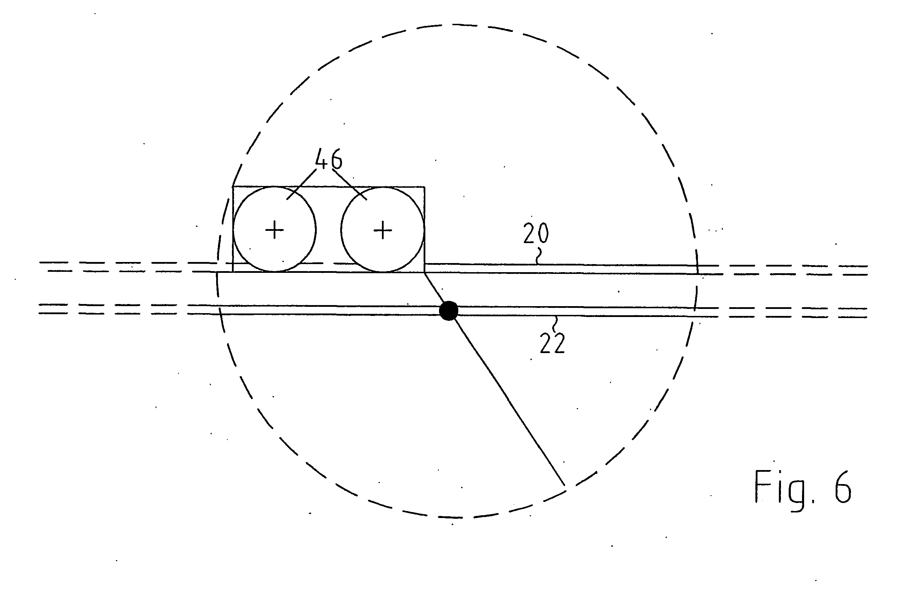

Figur 6 zeigt eine vergrößerte Darstellung der in Figur 4 und Figur 5 von einer gestrichelten Kreislinie umschlossenen Ausschnitte. Die Seilverbindung 10 ist dabei durch zwei Seile 20, 22 gebildet. Das obere Seil 20 ist dabei als Tragseil vorgesehen und trägt die beweglich darauf mit zwei Führungsrollen 46 angeordnete Gondel 14. Das untere Seil 22 ist ein Zugseil und ist fest mit der Gondel 14 verbunden. Durch Betätigen dieses Zugseiles 22 kann nunmehr die Gondel 14 an dem Tragseil hängend verfahren werden.

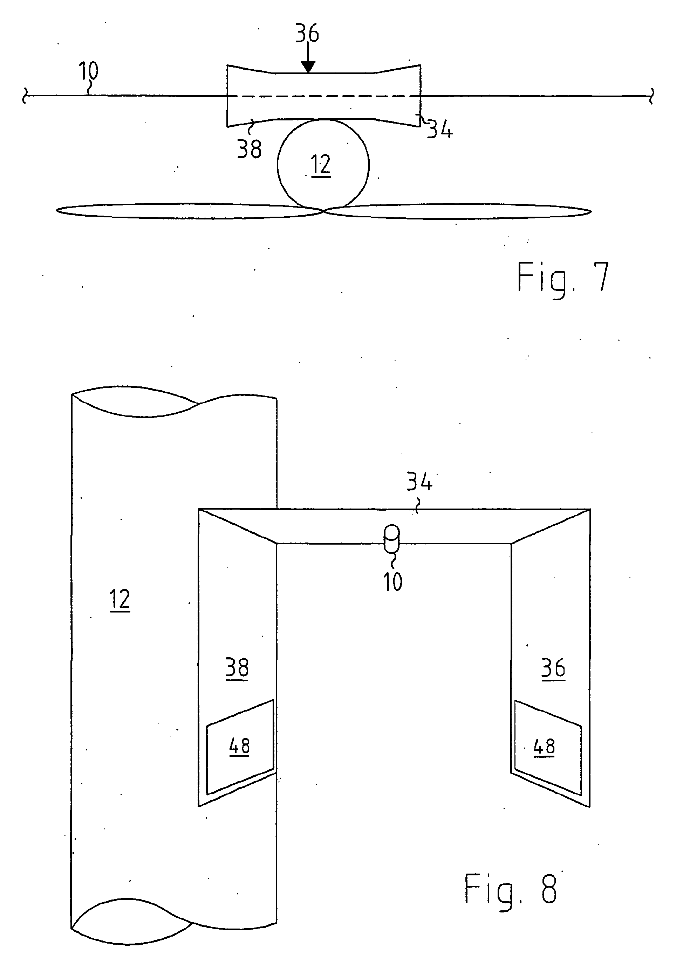

Die Figuren 7 und 8 zeigen eine Windenergieanlage 12 (Figur 7) bzw. einen Teil des Turmes der Windenergieanlage 12 (Figur 8) mit einer daran angeordneten, im Wesentlichen horizontal verlaufenden Abdeckung 34. Dabei ist Figur 7 eine Draufsicht und Figur 8 eine Seitenansicht.

Unterhalb dieser Abdeckung 34 verläuft die Seilverbindung 10, deren Aufhängung hier wegen der besseren Übersichtlichkeit nicht dargestellt ist. An den beiden parallel zu der Seilverbindung 10 verlaufenden Seiten der Abdeckung 34 sind jeweils Schutzwände 36 angeordnet.

Zusammen mit der Abdeckung 34 bilden diese Schutzwände 36 ein Schutzdach, das die Gondel 14 und die Öffnung 18 im Turm der Windenergieanlage 12 vor Witterungseinflüssen schützt. Dabei erstreckt sich dieses Schutzdach beiderseits der Öffnung 18 parallel zur Seilverbindung 10.

Da eine horizontale Auslenkung der Gondel 14 während der Fahrt zwischen zwei Windenergieanlagen 12, wenn auch dem Betrage und der Richtung nach begrenzt, stets möglich ist, sind die äußeren Enden des Schutzdaches verbreitert. Der Abstand der Schutzwände 36 nimmt in vorgegebenen Abschnitten des Schutzdaches mit steigender Entfernung von der Öffnung 18 zu. Im mittleren Abschnitt nahe der Öffnung 18 können die Abmessungen des Schutzdaches im Wesentlichen denen der Gondel 14 entsprechen.

Durch den größeren Abstand der Schutzwände 36 kann die Gondel 14 selbst darin, wenn sie z. B. durch Seitenwind horizontal ausgelenkt ist, zwischen die Schutzwände und damit in deren Windschatten verfahren werden. Durch diesen Windschatten wird die Gondel 14 nicht mehr ausgelenkt und daher kann dann der Abstand der Schutzwände 36, 38 geringer werden.

An den Schutzwänden 36, 38 sind im Einfahrtbereich elastische Beschichtungen 48 vorgesehen, die eine Kollision der Gondel 14 mit den Schutzwänden 36, 38 so dämpfen sollen, dass wenigstens keine nennenswerten Beschädigungen auftreten. Unabhängig von diesen Beschichtungen 48 an den Schutzwänden 36, 38 können entsprechende Beschichtungen z. B. in der Form von Fendern an der Gondel 14 vorgesehen sein.

## Patentansprüche

1. Windpark mit wenigstens zwei Windenergieanlagen, **gekennzeichnet durch** eine zwischen wenigstens zwei Windenergieanlagen (12) in vorgegebener Höhe verlaufende Seilverbindung (10) und eine an dieser Seilverbindung (10) angeordnete Gondel (14).

2. Windpark nach Anspruch 1, **gekennzeichnet durch** eine als Endlosseil über Umlenkvorrichtungen (16) an den Windenergieanlagen (12) verlaufende Seilverbindung (10) und eine feste Verbindung zwischen der Seilverbindung (10) und der Gondel (14).

3. Windpark nach Anspruch 1, **gekennzeichnet durch** eine Seilverbindung (10) aus einem Tragseil (20) und einem Zugseil (22) und eine beweglich an dem Tragseil (20) angeordnete und fest mit dem Zugseil (22) verbundene Gondel (14).

4. Windpark nach Anspruch 3, **gekennzeichnet durch** ein als Endlosseil entlang der Umlenkvorrichtungen (16) verlaufendes Zugseil (22).

5. Windpark nach einem der Ansprüche 3 oder 4, **gekennzeichnet durch** Umlenkvorrichtungen (16) mit zwei unabhängig voneinander drehbaren Umlenkrollen.

6. Windpark nach einem der Ansprüche 3 bis 5, **gekennzeichnet durch** einen motorischen Antrieb des Zugseiles (22).

7. Windpark nach Anspruch 1, **gekennzeichnet durch** eine sich aus eigener Kraft entlang der Seilverbindung (10) bewegende Gondel (14).

8. Windpark nach Anspruch 7, **gekennzeichnet durch** wenigstens einen motorischen Antrieb zum Bewegen der Gondel (14) entlang der Seilverbindung (10), wobei der Antrieb bevorzugt ein elektrischer Antrieb ist.

9. Windpark nach Anspruch 8, **gekennzeichnet durch** eine Antriebsenergieversorgüng des Gondelantriebs aus einem in der Gondel (14) mitgeführten Energievorrat.

10. Windpark nach einem der Ansprüche 7 bis 9, **gekennzeichnet durch** wenigstens einen manuell betätigbaren Antrieb zum Bewegen der Gondel (14) entlang der Seilverbindung (10).

11. Windpark nach einem der Ansprüche 7 bis 9, **gekennzeichnet durch** einen fernsteuerbaren Antrieb zum Bewegen der Gondel (14).

12. Windpark nach Anspruch 11, **gekennzeichnet durch** eine Verwendung wenigstens eines Teiles der Seilverbindung (10) als elektrischer Leiter.

13. Windpark nach Anspruch 12, **gekennzeichnet durch** ein in die Seilverbindung (10) integriertes Kabel.

14. Windpark nach einem der Ansprüche 1 bis 13, **gekennzeichnet durch** eine sternförmige Anordnung von Seilverbindungen (10) zwischen einer vorgegebenen Windenergieanlage (12) und den übrigen Windenergieanlagen (12).

15. Windpark nach einem der Ansprüche 1 bis 13 **gekennzeichnet durch** eine netzartige Anordnung der Seilverbindungen (10) zwischen den Windenergieanlagen (12), wobei jede Windenergieanlage (12) einen Knotenpunkt im Netz bildet.

16. Windpark nach einem der Ansprüche 1 bis 13, **gekennzeichnet durch** eine einzelne Seilverbindung (10) zwischen der Windenergieanlagen (12) des Windparks, welche wenigstens einen Teil der Windenergieanlagen (12) in einer vorgebbaren Reihenfolge miteinander verbindet.

17. Windpark nach einem der Ansprüche 14 bis 16, **gekennzeichnet durch** eine Kombination wenigstens zweier der genannten Strukturen der Seilverbindungen (10).

18. Windpark nach einem der vorstehenden Ansprüche, **gekennzeichnet durch** eine lösbare Arretierung zwischen der Gondel (14) und dem Turm einer Windenergieanlage (12).

19. Windpark nach Anspruch 18, **gekennzeichnet durch** eine als Haltemagnete ausgebildete Arretierung.

20. Windpark nach einem der vorstehenden Ansprüche, **gekennzeichnet durch** ein in einem vorgegebenen Abstand (25) parallel zu der Seilverbindung (10) verlaufendes Halteseil (24).

21. Windpark nach einem der vorstehenden Ansprüche, **gekennzeichnet durch** eine in einem vorgegebenen horizontalen Abstand zum Turm der Windenergieanlage (12) verlaufende Seilverbindung (10) und/oder ein in vorgegebenem horizontalen Abstand zum Turm verlaufendes Halteseil (24).

22. Windpark nach einem der Ansprüche 20 oder 21, **gekennzeichnet durch** Umlenkvorrichtungen (16) an den Windenergieanlagen (12) für das Halteseil (24).

23. Windpark nach einem der Ansprüche 20 bis 22, **dadurch gekennzeichnet, dass** die Seilverbindung (10) als Endlosseil ausgebildet ist und das Halteseil (24) Teil dieses Endlosseiles ist.

24. Windpark nach einem der vorstehenden Ansprüche, **gekennzeichnet durch** eine Gondel (14) mit einer um eine vertikale Achse rotierenden Schwungmasse (28).

25. Windpark nach einem der vorstehenden Ansprüche, **gekennzeichnet durch** eine verschließbare Öffnung (18) im Turm einer Windenergieanlage (12) in der Höhe, in welcher die Gondel (14) den Turm erreicht.

26. Windpark nach Anspruch 25, **gekennzeichnet durch** eine turmseitige Arretierungsvorrichtung in Gondelhöhe nahe der Öffnung (18).

27. Windpark nach einem der vorstehenden Ansprüche, **gekennzeichnet durch** eine oberhalb der Öffnung (18) am Turm wenigstens einer Windenergieanlage (12) angeordnete, im Wesentlichen horizontal verlaufende Abdeckung (34).

28. Windpark nach Anspruch 27, **gekennzeichnet durch** eine an der vom Turm abgewandten Seite der Abdeckung (34) angeordnete, im Wesentlichen vertikal und in einem vorgegebenen Abstand parallel zu der Seilverbindung (10) verlaufende erste Schutzwand (36).

29. Windpark nach einem der vorstehenden Ansprüche, **gekennzeichnet durch** wenigstens eine am Turm der Windenergieanlage (12) in der Höhe der Öffnung (18) angeordnete und im Wesentlichen parallel zu der Seilverbindung (10) verlaufende zweite Schutzwand (38).

30. Windpark nach Anspruch 29, **gekennzeichnet durch** eine zweigeteilte zweite Schutzwand (38), die sich beiderseits der Öffnung (18) eine vorgegebene Länge erstreckt.

31. Windpark nach einem der Ansprüche 28 bis 30, **gekennzeichnet durch** einen Abstand zwischen der ersten Schutzwand (36) und der zweiten Schutzwand (38), der sich in einem vorgegebenen, von der Öffnung (18) entfernten Abschnitt vergrößert.

32. Windpark nach einem der Ansprüche 28 bis 31, **gekennzeichnet durch** eine elastische Beschichtung (48) vorgegebener Dicke an wenigstens einer der Schutzwände (36, 38).

33. Windpark nach einem der Ansprüche 27 bis 32, **gekennzeichnet durch** wenigstens eine Beleuchtungseinrichtung an der Abdeckung (34) und/oder den Schutzwänden (36, 38).

34. Windpark nach einem der vorstehenden Ansprüche, **gekennzeichnet durch** wenigstens einen von der Öffnung (18) aus erreichbaren Steg, der im Wesentlichen parallel zu der Seilverbindung (10) verläuft und wenigstens eine Rückhalteeinrichtung über seine gesamte Länge aufweist.

35. Windpark nach einem der vorstehenden Ansprüche, **gekennzeichnet durch** eine von der Öffnung (18) aus erreichbare ein- oder mehrteilige Arbeitsplattform außerhalb des Turmes wenigstens einer Windenergieanlage (12).

36. Windpark nach einem der vorstehenden Ansprüche, **gekennzeichnet durch** eine von der Öffnung (18) aus erreichbare Arbeitsbühne oder einen Arbeitskorb außerhalb des Turmes wenigstens einer Windenergieanlage (12).

37. Windpark nach einem der vorstehenden Ansprüche, **gekennzeichnet durch** wenigstens eine am Turm der Windenergieanlage (12) nahe der Öffnung (18) angeordnete und im Wesentlichen parallel zu der Seilverbindung (10) verlaufende erste Führungsschiene (40).

38. Windpark nach Anspruch 37, **gekennzeichnet durch** eine in einem vorgegebenen Abstand im Wesentlichen parallel zu der ersten Führungsschiene (40) verlaufende zweite Führungsschiene (42).

39. Windpark nach einem der Ansprüche 37 oder 38, **gekennzeichnet durch** einen Abstand zwischen der ersten Führungsschiene (40) und der zweiten Führungsschiene (42), der sich in einem vorgegebenen, von der Öffnung entfernten Abschnitt vergrößert.

40. Windpark nach einem der Ansprüche 37 bis 39, **dadurch gekennzeichnet, dass** die Führungsschienen (40, 42) die Schutzwände (36) tragen.

41. Windpark nach einem der Ansprüche 25 bis 40, **dadurch gekennzeichnet, dass** die verschließbare Öffnung (18) größer als die Gondel (14) ist und die Seilverbindung (10) durch die Öffnung (18) hindurch bis in den Turm der Windenergieanlage (12) hinein verläuft.

42. Windpark nach einem der vorstehenden Ansprüche, **gekennzeichnet durch** wenigstens eine Weiche im Verlauf der Seilverbindung (10) an jedem Turm.

43. Windpark nach einem der vorstehenden Ansprüche, **gekennzeichnet durch** Last-Zurreinrichtungen und Zurrmittel in der Gondel (14).

44. Windpark nach einem der vorstehenden Ansprüche, **gekennzeichnet durch** eine Lasthebeeinrichtung an bzw. in der Gondel (14) zum Handhaben der Ladung.

45. Windpark nach einem der vorstehenden Ansprüche, **gekennzeichnet durch** eine Last-Hebe- und/oder Transportvorrichtung an bzw. in dem Turm wenigstens einer Windenergieanlage (12):

46. Windpark nach einem der vorstehenden Ansprüche, **gekennzeichnet durch** eine Gondel (14) mit einer geschlossenen Gondelkabine.

47. Windpark nach einem der vorstehenden Ansprüche, **gekennzeichnet durch** eine elastische Beschichtung der Gondel (14) an wenigstens einer Stelle, bei der die Kollisionsgefahr mit anderen Einrichtungen des Windparks am Größten ist.

48. Windpark nach einem der vorstehenden Ansprüche, **gekennzeichnet durch** eine schwimmfähige Gondel (14).

49. Windpark nach einem der vorstehenden Ansprüche, **dadurch gekennzeichnet, dass** die elastische Beschichtung gleichzeitig als Auftriebskörper dient.

50. Windpark nach einem der vorstehenden Ansprüche, **gekennzeichnet durch** eine Steuerungsvorrichtung mit einer zentralen Steuerungseinheit, Sensoren und/oder Aktuatoren.

51. Windpark nach Anspruch 50 **gekennzeichnet durch** die Anordnung der zentralen Steuerungseinheit in einer der Windenergieanlagen (12) des Windparks.

52. Windpark nach einem der Ansprüche 50 oder 51 **gekennzeichnet durch** wenigstens einen Sensor, der die Vorbeifahrt der Gondel (14) erfasst.

53. Windpark nach einem der vorstehenden Ansprüche, **gekennzeichnet durch** ein in der Gondel angeordnetes GPS-Modul.

54. Windpark nach einem der vorstehenden Ansprüche, **dadurch gekennzeichnet, dass** als Antriebsenergie für die elektrischen Antriebe die im Windpark erzeugte elektrische Energie verwendet wird.

55. Windpark nach Anspruch 54, **dadurch gekennzeichnet, dass** die Energie wahlweise am Generator, einem Gleichstromzwischenkreis oder an einem anderen geeigneten Punkt entnommen wird.

56. Windpark nach einem der vorstehenden Ansprüche, **dadurch gekennzeichnet, dass** ein Energietransport innerhalb des Windparks wenigstens teilweise in einer anderer als elektrischer Form erfolgt.

57. Windpark nach einem der vorstehenden Ansprüche, **gekennzeichnet durch** zwischen den Türmen der Windenergieanlagen (12) der Seilverbindung (10) benachbart angeordnete Masten (11) zum Tragen der Seilverbindung (10).

58. Verfahren zur Steuerung der Seilbahn eines Windparkes nach Anspruch 50, **gekennzeichnet durch** eine Auswertung der **durch** die Sensoren erfassten Situation **durch** die zentrale Steuerungseinheit und auslösen geeigneter Steuerungssignale für die Aktuatoren.

59. Verfahren nach Anspruch 58, **gekennzeichnet durch** die Übertragung von GPS-Daten und/oder in anderer Form kodierten Daten, welche die Position der Gondel (14) bezeichnen, zu der zentralen Steuerungseinheit.

60. Windpark nach einem der vorstehenden Ansprüche, **gekennzeichnet durch** wenigstens eine Windenergieanlage (12) mit einem Aufenthaltsbereich zur Beherbergung wenigstens einer Person.

61. Windpark nach Anspruch 60, **gekennzeichnet durch** eine Ausstattung des Aufenthaltsbereiches mit einem Sanitärbereich und/oder einem Küchenbereich und/oder einem Vorratsbereich und/oder einem Ruhebereich.

62. Windpark nach einem Ansprüche 60 oder 61, **gekennzeichnet durch** eine Integration des Aufenthaltsbereiches in den Turm einer Windenergieanlage (12).

63. Windpark nach einem der Ansprüche 60 bis 62, **gekennzeichnet durch** eine Anordnung des Aufenthaltsbereiches in mehreren miteinander verbundenen Ebenen.

64. Windpark nach einem der Ansprüche 60 bis 63, **gekennzeichnet durch** eine Vorrichtung zum Signalisieren vorgegebener Daten und/oder eine Vorrichtung zum Beeinflussen vorgegebener Betriebsparameter innerhalb des Aufenthaltsbereiches.

65. Windpark nach einem der Ansprüche 60 bis 64, **gekennzeichnet durch** eine Kommunikationsvorrichtung zum Austausch von Informationen und/oder Daten.

66. Windpark nach einem der Ansprüche 60 bis 65, **gekennzeichnet durch** eine Wasseraufbereitungsanlage zur Trinkwasser- und Brauchwasser-Versorgung des Personals.

67. Windpark nach einem der Ansprüche 60 bis 66, **gekennzeichnet durch** Energiespeicher zum Speichern von Energie zur Überbrückung von Versorgungslücken.

68. Windpark nach einem der Ansprüche 60 bis 67, **gekennzeichnet durch** Vorrichtungen zurWetterbeobachtung bzw. Erfassung, Auswertung, Aufzeichnung und/oder Weiterleitung meteorologischer Daten.

69. Windpark nach einem der Ansprüche 60 bis 68, **dadurch gekennzeichnet, dass** wenigstens die Windenergieanlage mit dem Aufenthaltsbereich Navigationshilfen für die Schifffahrt und/oder Einrichtungen für die Versorgung von Verunglückten bzw. Schiffbrüchigen aufweist.

70. Windpark nach einem der Ansprüche 60 bis 69 **gekennzeichnet durch** eine Aussichtsplattform, welche den Turm der Windenergieanlage mit dem Aufenthaltsbereich vollständig oder wenigstens teilweise in einer Vorzugsrichtung unterhalb des Maschinenhauses umschließt.

71. Windpark nach Anspruch 70, **dadurch gekennzeichnet, dass** die Aussichtsplattform wenigstens teilweise Fenster aufweist, die eine Beobachtung der Umbegung der Windenergieanlage ermöglichen.

72. Windpark nach einem der Ansprüche 70 oder 71, **gekennzeichnet durch** einen Aufzug zwischen dem Aufenthaltsbereich und der Aussichtsplattform.

## Claims

1. Wind farm having at least two wind turbines, **characterised by** a cable connection (10) extending at a predefined height between at least two wind turbines (12) and by a gondola (14) disposed on that cable connection (10).

2. Wind farm according to claim 1, **characterised by** a cable connection (10) that extends in the form of an endless cable via deflection devices (16) on the wind turbines (12) and by a fixed connection between the cable connection (10) and the gondola (14).

3. Wind farm according to claim 1, **characterised by** a cable connection (10) comprising a carrying cable (20) and a traction cable (22) and by a gondola (14) that is movably disposed on the carrying cable (20) and fixedly connected to the traction cable (22).

4. Wind farm according to claim 3, **characterised by** a traction cable (22) extending in the form of an endless cable along the deflection devices (16).

5. Wind farm according to either claim 3 or claim 4, **characterised by** deflection devices (16) having two deflection pulleys which are rotatable independently of each other.

6. Wind farm according to any one of claims 3 to 5, **characterised by** the traction cable (22) being driven by a motor.

7. Wind farm according to claim 1, **characterised by** a gondola (14) that moves along the cable connection (10) under its own power.

8. Wind farm according to claim 7, **characterised by** at least one motor drive for moving the gondola (14) along the cable connection (10), wherein the drive is preferably an electric drive.

9. Wind farm according to claim 8, **characterised by** the gondola drive being supplied with driving energy from an energy supply that is carried in the gondola (14).

10. Wind farm according to any one of claims 7 to 9, **characterised by** at least one manually operable drive for moving the gondola (14) along the cable connection (10).

11. Wind farm according to any one of claims 7 to 9, **characterised by** a remotely controllable drive for moving the gondola (14).

12. Wind farm according to claim 11, **characterised by** use of at least part of the cable connection (10) as an electrical conductor.

13. Wind farm according to claim 12, **characterised by** an electrical cable integrated in the cable connection (10).

14. Wind farm according to any one of claims 1 to 13, **characterised by** a star-shaped arrangement of cable connections (10) between a predefined wind turbine (12) and the rest of the wind turbines (12).

15. Wind farm according to any one of claims 1 to 13, **characterised by** a network-like arrangement of cable connections (10) between the wind turbines (12), wherein each wind turbine (12) forms a node in the network.

16. Wind farm according to any one of claims 1 to 13, **characterised by** a single cable connection (10) between the wind turbines (12) of the wind farm, which cable connection (10) connects at least some of the wind turbines (12) to one another in a predefinable sequence.

17. Wind farm according to any one of claims 14 to 16, **characterised by** a combination of at least two of the mentioned configurations of the cable connections.

18. Wind farm according to any one of the preceding claims, **characterised by** a releasable locking device between the gondola (14) and the tower of a wind turbine (12).

19. Wind farm according to claim 18, **characterised by** a locking device in the form of retaining magnets.

20. Wind farm according to any one of the preceding claims, **characterised by** a stay wire (24) extending at a predefined distance (25) from and parallel to the cable connection (10).

21. Wind farm according to any one of the preceding claims, **characterised by** a cable connection (10) extending at a predefined horizontal distance from the tower of the wind turbine (12) and/or by a stay wire (24) extending at a predefined horizontal distance from the tower.

22. Wind farm according to either claim 20 or claim 21, **characterised by** deflection devices (16) on the wind turbines (12) for the stay wire (24).

23. Wind farm according to any one of claims 20 to 22, **characterised in that** the cable connection (10) is in the form of an endless cable and the stay wire (24) is part of that endless cable.

24. Wind farm according to any one of the preceding claims, **characterised by** a gondola (14) having a flywheel mass (28) that rotates about a vertical axis.

25. Wind farm according to any one of the preceding claims, **characterised by** a closable opening (18) in the tower of a wind turbine (12) at the height where the gondola (14) reaches the tower.

26. Wind farm according to claim 25, **characterised by** a locking device on the tower, close to the opening (18) and at the level of the gondola.

27. Wind farm according to any one of the preceding claims, **characterised by** a cover (34) which extends substantially horizontally and is disposed above the opening (18) on the tower of at least one wind turbine (12).

28. Wind farm according to claim 27, **characterised by** a first protective wall (36) which extends substantially vertically and at a predefined distance from and parallel to the cable connection (10) and which is disposed on the side of the cover (34) remote from the tower.

29. Wind farm according to any one of the preceding claims, **characterised by** at least one second protective wall (38) which is disposed on the tower of the wind turbine (12) at the level of the opening (18) and which extends substantially parallel to the cable connection (10).

30. Wind farm according to claim 29, **characterised by** a two-part second protective wall (38) which extends to a predefined length on both sides of the opening (18).

31. Wind farm according to any one of claims 28 to 30, **characterised by** a distance between the first protective wall (36) and the second protective wall (38) that becomes greater in a predefined portion away from the opening (18).

32. Wind farm according to any one of claims 28 to 31, **characterised by** a resilient covering (48) of a predefined thickness on at least one of the protective walls (36, 38).

33. Wind farm according to any one of claims 27 to 32, **characterised by** at least one lighting device on the cover (34) and/or on the protective walls (36, 38).

34. Wind farm according to any one of the preceding claims, **characterised by** at least one gangway which is accessible from the opening (18) and which extends substantially parallel to the cable connection (10) and has at least one restraint device along its entire length.

35. Wind farm according to any one of the preceding claims, **characterised by** a one-piece or multi-part work platform outside the tower of at least one wind turbine (12), which work platform is accessible from the opening (18).

36. Wind farm according to any one of the preceding claims, **characterised by** a man-carrying platform accessible from the opening (18) or by a work cage outside the tower of at least one wind turbine (12).

37. Wind farm according to any one of the preceding claims, **characterised by** at least a first guide rail (40) which is arranged on the tower of the wind turbine (12) close to the opening (18) and which extends substantially parallel to the cable connection (10).

38. Wind farm according to claim 37, **characterised by** a second guide rail (42) which extends at a distance from and substantially parallel to the first guide rail (40).

39. Wind farm according to claim 37 or claim 38, **characterised by** a distance between the first guide rail (40) and the second guide rail (42) that becomes greater in a predefined portion away from the opening.

40. Wind farm according to any one of claims 37 to 39, **characterised in that** the guide rails (40, 42) support the protective walls (36).

41. Wind farm according to any one of claims 25 to 40, **characterised in that** the closable opening (18) is larger than the gondola (14), and the cable connection (10) passes through the opening (18) and into the tower of the wind turbine (12).

42. Wind farm according to any one of the preceding claims, **characterised by** at least one set of points in the course of the cable connection (10) at each tower.

43. Wind farm according to any one of the preceding claims, **characterised by** load-lashing equipment and lashing means in the gondola (14).

44. Wind farm according to any one of the preceding claims, **characterised by** a hoisting device on or in the gondola (14) for handling the load.

45. Wind farm according to any one of the preceding claims, **characterised by** a hoisting and/or transport apparatus on or in the tower of at least one wind turbine (12).

46. Wind farm according to any one of the preceding claims, **characterised by** a gondola (14) with an enclosed gondola cabin.

47. Wind farm according to any one of the preceding claims, **characterised by** a resilient coating of the gondola (14) at at least one site where the risks of collision with other installations of the wind farm is greatest.

48. Wind farm according to any one of the preceding claims, **characterised by** a buoyant gondola (14).

49. Wind farm according to any one of the preceding claims, **characterised in that** the resilient covering at the same time serves as a float.

50. Wind farm according to any one of the preceding claims, **characterised by** a control device having a central control unit, sensors and/or actuators.

51. Wind farm according to claim 50, **characterised by** the central control unit being disposed in one of the wind turbines (12) of the wind farm.

52. Wind farm according to either claim 50 or claim 51, **characterised by** at least one-sensor that detects when the gondola (14) passes by.

53. Wind farm according to any one of the preceding claims, **characterised by** a GPS module disposed in the gondola (14).

54. Wind farm according to any one of the preceding claims, **characterised in that** the electrical energy generated in the wind farm is used as the driving energy for the electrical drives.

55. Wind farm according to claim 54, **characterised in that** the energy is optionally taken off at the generator, at a d.c. link or at another suitable point.

56. Wind farm according to any one of the preceding claims, **characterised in that** energy is transported within the wind farm at least partially in a form other than an electrical form.

57. Wind farm according to any one of the preceding claims, **characterised by** masts (11) for supporting the cable connection (10), which masts (11) are arranged between the towers of the wind turbines (12) and adjacent to the cable connection (10).

58. Method for controlling the cable car system of a wind farm according to claim 50, **characterised by** evaluation by the central control unit of the situation detected by the sensors and by the triggering of suitable control signals for the actuators.

59. Method according to claim 58, **characterised by** the transmission to the central control unit of GPS data and/or data encoded in another form which indicate the position of the gondola (14).

60. Wind farm according to any one of the preceding claims, **characterised by** at least one wind turbine (12) having an accommodation area for accommodating at least one person.

61. Wind farm according to claim 60, **characterised by** the accommodation area being equipped with a sanitary area and/or a kitchen area and/or a storage area and/or a rest area.

62. Wind farm according to either claim 60 or claim 61, **characterised by** the accommodation area being integrated in the tower of a wind turbine (12).

63. Wind farm according to any one of claims 60 to 62, **characterised by** the accommodation area being disposed in a plurality of interconnected levels.

64. Wind farm according to any one of claims 60 to 63, **characterised by** a device for signalling predefined data and/or a device for influencing predefined operating parameters inside the accommodation area.

65. Wind farm according to any one of claims 60 to 64, **characterised by** a communication device for exchanging information and/or data.

66. Wind farm according to any one of claims 60 to 65, **characterised by** a water treatment system for supplying the personnel with drinking water and service water.

67. Wind farm according to any one of claims 60 to 66, **characterised by** energy stores for storing energy for the purpose of bridging gaps in supply.

68. Wind farm according to any one of claims 60 to 67, **characterised by** instruments for weather observation or for collecting, evaluating, recording and/or forwarding meteorological data.

69. Wind farm according to any one of claims 60 to 68, **characterised in that** at least the wind turbine having the accommodation area has navigation aids for shipping and/or facilities for caring for injured or shipwrecked persons.

70. Wind farm according to any one of claims 60 to 69, **characterised by** a viewing platform which surrounds the tower of the wind turbine having the accommodation area, completely or at least partially in a preferred direction, beneath the nacelle.

71. Wind farm according to claim 70, **characterised in that** the viewing platform has windows at least in parts, which windows enable the surroundings of the wind turbine to be observed.

72. Wind farm according to either claim 70 or claim 71, **characterised by** a lift between the accommodation area and the viewing platform.

## Revendications

1. Parc éolien avec au moins deux éoliennes, **caractérisé par** une liaison par câble (10) disposée entre au moins deux éoliennes (12) et s'étendant à une hauteur déterminée et par une nacelle (14) disposée sur cette liaison par câble (10).

2. Parc éolien selon la revendication 1, **caractérisé par** une liaison par câble (10) s'étendant comme câble sans fin par l'intermédiaire de dispositifs de renvoi (16) le long des éoliennes (12) et par une liaison fixe entre la liaison par câble (10) et la nacelle (14).

3. Parc éolien selon la revendication 1, **caractérisé par** une liaison par câble (10) se composant d'un câble porteur (20) et d'un câble tracteur (22) et par une nacelle (14) disposée de manière mobile sur le câble porteur (20) et reliée de manière fixe avec le câble tracteur (22).

4. Parc éolien selon la revendication 3, **caractérisé par** un câble tracteur (22) s'étendant comme câble sans fin le long des dispositifs de renvoi (16).

5. Parc éolien selon l'une quelconque des revendications 3 ou 4, **caractérisé par** des dispositifs de renvoi (16) comprenant deux rouleaux de renvoi pouvant tourner indépendamment l'un de l'autre.

6. Parc éolien selon l'une quelconque des revendications 3 à 5, **caractérisé par** un système d'entraînement motorisé du câble tracteur (22).

7. Parc éolien selon la revendication 1, **caractérisé par** une nacelle (14) se déplaçant par sa propre force le long de la liaison par câble (10).

8. Parc éolien selon la revendication 7, **caractérisé par** au moins un système d'entraînement motorisé pour déplacer la nacelle (14) le long de la liaison par câble (10), le système d'entraînement étant de préférence un système d'entraînement électrique.

9. Parc éolien selon la revendication 8, **caractérisé par** une alimentation en énergie d'entraînement du moteur de la nacelle à partir d'une réserve d'énergie qui est emmenée à bord de la nacelle (14).

10. Parc éolien selon l'une quelconque des revendications 7 à 9, **caractérisé par** au moins un système d'entraînement pouvant être actionné à la main pour déplacer la nacelle (14) le long de la liaison par câble (10).

11. Parc éolien selon l'une quelconque des revendications 7 à 9, **caractérisé par** un système d'entraînement pouvant être télécommandé pour déplacer la nacelle (14).

12. Parc éolien selon la revendication 11, **caractérisé par** une utilisation d'au moins une partie de la liaison par câble (10) comme conducteur électrique.

13. Parc éolien selon la revendication 12, **caractérisé par** un câble intégré dans la liaison par câble (10).

14. Parc éolien selon l'une quelconque des revendications 1 à 13, **caractérisé par** une disposition en forme d'étoile de liaisons par câble (10) entre une éolienne prédéfinie (12) et les autres éoliennes (12).

15. Parc éolien selon l'une quelconque des revendications 1 à 13, **caractérisé par** une disposition en forme de réseau des liaisons par câbles (10) entre les éoliennes (12), chaque éolienne (12) formant un point nodal dans le réseau.

16. Parc éolien selon l'une quelconque des revendications 1 à 13, **caractérisé par** une unique liaison par câble (10) entre les éoliennes (12) du parc éolien, laquelle relie entre elles selon une chronologie pouvant être prédéfinie au moins une partie des éoliennes (12).

17. Parc éolien selon l'une quelconque des revendications 14 à 16, **caractérisé par** une combinaison d'au moins deux des structures qui ont été citées pour les liaisons par câble (10).

18. Parc éolien selon l'une quelconque des revendications précédentes, **caractérisé par** un dispositif d'arrêt pouvant être débloqué et se trouvant entre la nacelle (14) et la tour d'une éolienne (12).

19. Parc éolien selon la revendication 18, **caractérisé par** un dispositif d'arrêt configuré comme aimant de retenue.

20. Parc éolien selon l'une quelconque des revendications précédentes, **caractérisé par** un câble de retenue (24) s'étendant avec un espacement prédéfini (25) parallèlement à la liaison par câble (10).

21. Parc éolien selon l'une quelconque des revendications précédentes, **caractérisé par** une liaison par câble (10) s'étendant avec un espacement horizontal prédéfini par rapport à la tour de l'éolienne (12) et/ou par un câble de retenue (24) s'étendant avec un espacement horizontal prédéfini par rapport à la tour.

22. Parc éolien selon l'une quelconque des revendications 20 ou 21, **caractérisé par** des dispositifs de renvoi (16) pour le câble de retenue (24) se trouvant sur les éoliennes (12).

23. Parc éolien selon l'une quelconque des revendications 20 à 22, **caractérisé en ce que** la liaison par câble (10) est configurée comme câble sans fin et **en ce que** le câble de retenue (24) est une partie de ce câble sans fin.

24. Parc éolien selon l'une quelconque des revendications précédentes, **caractérisé par** une nacelle (14) comprenant une masse inertielle d'équilibrage (28) qui tourne autour d'un axe vertical.

25. Parc éolien selon l'une quelconque des revendications précédentes, **caractérisé par** une ouverture obturable (18) qui se trouve dans la tour d'une éolienne (12) et qui est située à la hauteur à laquelle la nacelle (14) atteint la tour.

26. Parc éolien selon la revendication 25, **caractérisé par** un dispositif d'arrêt placé du côté de la tour et se trouvant à la hauteur de la nacelle (14) et à proximité de l'ouverture (18).

27. Parc éolien selon l'une quelconque des revendications précédentes, **caractérisé par** une couverture (34) qui s'étend sensiblement dans le sens horizontal et qui est disposée au-dessus de l'ouverture (18) sur la tour d'au moins une éolienne (12).

28. Parc éolien selon la revendication 27, **caractérisé par** une première paroi de protection (36) disposée sur le côté de la couverture (34) qui est opposé à la tour et s'étendant sensiblement dans le sens vertical et avec un espacement prédéfini parallèlement à la liaison par câble (10).

29. Parc éolien selon l'une quelconque des revendications précédentes, **caractérisé par** au moins une deuxième paroi de protection (38) disposée sur la tour de l'éolienne (12) à la hauteur de l'ouverture (18) et s'étendant sensiblement parallèlement à la liaison par câble (10).

30. Parc éolien selon la revendication 29, **caractérisé par** une deuxième paroi de protection divisée en deux (38) qui s'étend des deux côtés de l'ouverture (18) sur une longueur prédéfinie.

31. Parc éolien selon l'une quelconque des revendications 28 à 30, **caractérisé par** un espacement entre la première paroi de protection (36) et la deuxième paroi de protection (38) qui s'agrandit dans une section prédéfinie et éloignée de l'ouverture (18).

32. Parc éolien selon l'une quelconque des revendications 28 à 31, **caractérisé par** un revêtement souple (48) d'une épaisseur pouvant être prédéfinie se trouvant sur au moins une des parois de protection (36, 38).

33. Parc éolien selon l'une quelconque des revendications 27 à 32, **caractérisé par** au moins un dispositif d'éclairage sur la couverture (34) et/ou sur les parois de protection (36, 38).

34. Parc éolien selon l'une quelconque des revendications précédentes, **caractérisé par** au moins une traverse, laquelle est accessible depuis l'ouverture (18), qui s'étend sensiblement parallèlement à la liaison par câble (10) et qui comprend au moins un dispositif de retenue sur toute sa longueur.

35. Parc éolien selon l'une quelconque des revendications précédentes, **caractérisé par** une plate-forme de travail en une ou en plusieurs partie(s), laquelle est accessible depuis l'ouverture (18) et qui se trouve en dehors de la tour d'au moins une éolienne (12).

36. Parc éolien selon l'une quelconque des revendications précédentes, **caractérisé par** une estrade de travail ou par une nacelle de travail, laquelle est accessible depuis l'ouverture (18) et qui se trouve en dehors de la tour d'au moins une éolienne (12).

37. Parc éolien selon l'une quelconque des revendications précédentes, **caractérisé par** au moins un premier rail de guidage (40) qui est disposé sur la tour de l'éolienne (12) à proximité de l'ouverture (18) et qui s'étend sensiblement parallèlement à la liaison par câble (10).

38. Parc éolien selon la revendication 37, **caractérisé par** un deuxième rail de guidage (42) s'étendant avec un espacement prédéfini sensiblement parallèlement au premier rail de guidage (40).

39. Parc éolien selon l'une quelconque des revendications 37 ou 38, **caractérisé par** un espacement entre le premier rail de guidage (40) et le deuxième rail de guidage (42) qui s'agrandit dans une section prédéfinie et éloignée de l'ouverture.

40. Parc éolien selon l'une quelconque des revendications 37 à 39, **caractérisé en ce que** les rails de guidage (40, 42) portent les parois de protection (36).

41. Parc éolien selon l'une quelconque des revendications 25 à 40, **caractérisé en ce que** l'ouverture obturable (18) est plus grande que la nacelle (14) et **en ce que** la liaison par câble (10) s'étend à travers l'ouverture (18) jusqu'à l'intérieur de la tour de l'éolienne (12).

42. Parc éolien selon l'une quelconque des revendications précédentes, **caractérisé par** au moins un aiguillage se trouvant au niveau de chaque tour dans le cheminement de la liaison par câble (10).

43. Parc éolien selon l'une quelconque des revendications précédentes, **caractérisé par** des dispositifs d'amarrage de charges et des moyens d'amarrage disposés dans la nacelle (14).

44. Parc éolien selon l'une quelconque des revendications précédentes, **caractérisé par** un dispositif de levage de charges disposé sur ou dans la nacelle (14) et servant à manipuler le chargement.

45. Parc éolien selon l'une quelconque des revendications précédentes, **caractérisé par** un dispositif de levage et/ou de transport de charges se trouvant sur ou dans la tour d'au moins une éolienne (12).

46. Parc éolien selon l'une quelconque des revendications précédentes, **caractérisé par** une nacelle (14) munie d'une cabine de nacelle fermée.

47. Parc éolien selon l'une quelconque des revendications précédentes, **caractérisé par** un revêtement souple placé sur la nacelle (14) à au moins un endroit où le danger de collision avec d'autres dispositifs du parc éolien est le plus grand.

48. Parc éolien selon l'une quelconque des revendications précédentes, **caractérisé par** une nacelle (14) qui est flottable.

49. Parc éolien selon l'une quelconque des revendications précédentes, **caractérisé en ce que** le revêtement souple sert en même temps de flotteur.

50. Parc éolien selon l'une quelconque des revendications précédentes, **caractérisé par** un dispositif de commande comprenant une unité centrale de commande, des capteurs et/ou des actionneurs.

51. Parc éolien selon la revendication 50, **caractérisé par** la disposition de l'unité centrale de commande dans une des éoliennes (12) du parc éolien.

52. Parc éolien selon l'une quelconque des revendications 50 ou 51, **caractérisé par** au moins un capteur qui détecte le passage de la nacelle (14).

53. Parc éolien selon l'une quelconque des revendications précédentes, **caractérisé par** un module GPS disposé dans la nacelle.

54. Parc éolien selon l'une quelconque des revendications précédentes, **caractérisé en ce que** l'énergie électrique produite dans le parc éolien est utilisée comme énergie d'entraînement pour les moteurs électriques.

55. Parc éolien selon la revendication 54, **caractérisé en ce que** l'énergie est prélevée au choix sur le générateur, sur un circuit intermédiaire à courant continu ou à un autre endroit approprié.

56. Parc éolien selon l'une quelconque des revendications précédentes, **caractérisé en ce qu'**un transport d'énergie à l'intérieur du parc éolien est réalisé au moins partiellement dans une forme autre que la forme électrique.

57. Parc éolien selon l'une quelconque des revendications précédentes, **caractérisé par** des mats (11) qui servent à porter la liaison par câble (10) et qui sont disposés entre les tours des éoliennes (12) au voisinage de la liaison par câble (10).

58. Procédé pour commander le cheminement des câbles d'un parc éolien selon la revendication 50, **caractérisé par** une évaluation par l'unité centrale de commande de la situation détectée par les capteurs et par le déclenchement de signaux de commande appropriés pour les actionneurs.

59. Procédé selon la revendication 58, **caractérisé par** la transmission à l'unité centrale de commande de données GPS et/ou de données codées sous une autre forme, lesquelles indiquent la position de la nacelle (14).

60. Parc éolien selon l'une quelconque des revendications précédentes, **caractérisé par** au moins une éolienne (12) disposant d'une zone de séjour servant à héberger au moins une personne.

61. Parc éolien selon la revendication 60, **caractérisé en ce que** la zone de séjour est équipée d'un espace sanitaire et/ou d'un espace de cuisine et/ou d'un espace de stockage de réserves et/ou d'un espace de repos.

62. Parc éolien selon l'une quelconque des revendications 60 ou 61, **caractérisé par** une intégration de la zone de séjour dans la tour d'une éolienne (12).

63. Parc éolien selon l'une quelconque des revendications 60 à 62, **caractérisé par** une disposition de la zone de séjour sur un ou plusieurs niveau(x) reliés entre eux.

64. Parc éolien selon l'une quelconque des revendications 60 à 63, **caractérisé par** la présence à l'intérieur de la zone de séjour d'un dispositif servant à signaler des données prédéfinies et/ou d'un dispositif servant à exercer une influence sur des paramètres d'exploitation prédéfinis.

65. Parc éolien selon l'une quelconque des revendications 60 à 64, **caractérisé par** un dispositif de communication servant à échanger des informations et/ou des données.

66. Parc éolien selon l'une quelconque des revendications 60 à 65, **caractérisé par** une installation de traitement de l'eau servant à alimenter le personnel en eau potable et en eau sanitaire.

67. Parc éolien selon l'une quelconque des revendications 60 à 66, **caractérisé par** des accumulateurs d'énergie servant à accumuler de l'énergie pour surmonter des périodes de manque d'énergie.

68. Parc éolien selon l'une quelconque des revendications 60 à 67, **caractérisé par** des dispositifs servant à l'observation météorologique ou à la saisie, l'exploitation, l'enregistrement et/ou la transmission de données météorologiques.

69. Parc éolien selon l'une quelconque des revendications 60 à 68, **caractérisé en ce qu'**au moins l'éolienne munie de la zone de séjour comprend des aides à la navigation pour la circulation des bateaux et/ou des installations pour assurer le ravitaillement des accidentés ou des naufragés.

70. Parc éolien selon l'une quelconque des revendications 60 à 69, **caractérisé par** une plate-forme panoramique qui, au-dessous de la salle des machines, entoure entièrement ou au moins partiellement dans une direction préférentielle la tour de l'éolienne comprenant la zone de séjour.

71. Parc éolien selon la revendication 70, **caractérisé en ce que** la plate-forme panoramique comprend au moins partiellement des fenêtres qui permettent une observation des alentours de l'éolienne.

72. Parc éolien selon l'une quelconque des revendications 70 ou 71, **caractérisé par** un ascenseur entre la zone de séjour et la plate-forme panoramique.
